# DEMANDE DE BREVET EUROPEEN

(11) **EP 1 211 106 A2**
(43) Date de publication de la demande: **05.06.2002**
(21) Numéro de dépôt: 01402719.7
(22) Date de dépôt: 19.10.2001
(51) Int. Cl.: B60G 7/00, B60G 15/06, F16F 1/38

(54) **Suspension de véhicule automobile**

(30) Priorité: 23.10.2000 FR 0013555; 23.10.2000 FR 0013556; 23.10.2000 FR 0013553
(71) Demandeur: Peugeot Citroen Automobiles SA, 92200 Neuilly sur Seine (FR)
(72) Inventeur: Berthias, Gilles, 91270 Vigneux/Seine (FR); Chatain, Jean-Claude, 91230 Montgeron (FR); Mennesson, Dominique Marie Christophe, 94700 Maison-Alfort (FR)
(74) Mandataire: Thinat, Michel

(57) **Abrégé**

La présente invention concerne une suspension de véhicule automobile.

La suspension est caractérisée en ce que la tige d'amortisseur (4) et le ressort de suspension (2) sont reliés à la caisse (C) du véhicule respectivement par deux blocs en élastomère (7, 13) de façon à obtenir un filtrage propre à la tige, ainsi qu'un filtrage propre au ressort. Cette situation s'applique dans le cas d'un ressort coaxial à son amortisseur et pour des cinématiques à amortisseur sans et avec débattement angulaire. Dans le cas d'un débattement angulaire, le point de pivotement de l'amortisseur (1) autour de l'axe rigide de liaison (8) à la caisse (C) entraîne le pivotement de la coupelle d'appui (5) de ce ressort.

L'invention trouve application dans le domaine de l'automobile.

## Description

La présente invention concerne une suspension de véhicule automobile.

Une telle suspension est du type comprenant un amortisseur monté entre la caisse du véhicule et un support de la fusée de roue de celui-ci et un ressort hélicoïdal monté précontraint entre la caisse et le cylindre de l'amortisseur concentriquement à la tige de l'amortisseur par l'intermédiaire respectivement d'une coupelle d'appui supérieure et d'une coupelle d'appui inférieure.

Cet agencement connu a pour inconvénients d'occasionner, en plus d'un confort très moyen du véhicule, des remontées de chocs dues à un mauvais filtrage résultant en fait de l'absence d'une dissociation ou découplage de l'appui du ressort de suspension de celui de la tige d'amortisseur.

On a déjà proposé des solutions selon lesquelles l'appui du ressort de suspension était dissocié de l'appui de l'amortisseur, mais ces solutions n'ont pas donné entière satisfaction du point de vue confort du véhicule.

La présente invention a pour but d'éliminer les inconvénients ci-dessus en proposant une suspension de véhicule automobile comprenant un amortisseur monté entre la caisse du véhicule et un support de la fusée de roue, un ressort hélicoïdal monté précontraint entre la caisse et le cylindre de l'amortisseur concentriquement à la tige de celui-ci par l'intermédiaire respectivement d'une coupelle ou collerette d'appui supérieure et d'une coupelle d'appui inférieure, et deux blocs en élastomère permettant d'absorber les vibrations produites notamment par le ressort et l'amortisseur, et qui est caractérisée en ce que la coupelle ou collerette d'appui du ressort est fixée à la caisse par l'intermédiaire d'un premier bloc élastomère solidaire coaxialement d'un axe rigide fixé à la caisse transversalement à la tige d'amortisseur au-dessus d'un ressort et en ce que l'extrémité de latige d'amortisseur est reliée à la caisse par l'intermédiaire d'un second bloc en élastomère en forme de manchon d'une raideur en direction transversale à l'axe rigide plus faible que celle du premier bloc en élastomère suivant cette même direction.

Le premier bloc en élastomère est en forme d'étrier dont les deux branches sont solidaires coaxialement de l'axe rigide de part et d'autre du second bloc en élastomère et dont la partie de liaison des deux branches est traversée par l'extrémité de la tige d'amortisseur et reliée à cette extrémité de façon à permettre au ressort de suivre tout pivotement de la tige d'amortisseur autour de l'axe rigide dans un plan perpendiculaire à ce dernier.

De préférence, l'extrémité de la tige d'amortisseur est solidaire d'une douille métallique rigide coaxiale fixée radialement à une cage rigide cylindrique de logement du second bloc en élastomère fixé par adhérisation dans la cage cylindrique et sur l'axe rigide.

La partie de liaison des deux branches du premier bloc en élastomère comporte un manchon partiellement solidaire, par adhérisation, de la douille métallique rigide en des emplacements diamétralement opposés suivant une direction perpendiculaire à l'axe rigide.

Le premier bloc en élastomère est avantageusement logé dans une cage métallique emboutie de forme conjuguée au second bloc et dont la paroi plane inférieure constitue la coupelle supérieure d'appui du ressort.

Le manchon du premier bloc en élastomère comprend deux évidements diamétralement opposés suivant une direction parallèle à l'axe rigide et s'étendant parallèlement à l'axe du manchon, chaque évidement ayant en section transversale la forme d'une lumière arquée et permettant de réduire la raideur du manchon en élastomère suivant la direction perpendiculaire à l'axe rigide.

L'extrémité de la tige d'amortisseur est fixée par vissage ou tout autre moyen approprié d'assemblage dans la douille métallique rigide.

L'axe rigide est en forme d'entretoise traversée par un boulon de fixation à la caisse du véhicule.

Le premier bloc en élastomère est monobloc.

Selon un deuxième de réalisation, le premier bloc en élastomère est en forme de manchon logé dans une cage cylindrique à laquelle est fixée radialement et extérieurement une douille cylindrique comportant la collerette et en ce que le second bloc en élastomère en forme de manchon est logé dans la douille cylindrique et fixé à l'extrémité de la tige d'amortisseur par l'intermédiaire d'une bague cylindrique interne solidaire coaxialement de cette extrémité.

Le second bloc en élastomère est logé dans la douille cylindrique par l'intermédiaire d'une bague cylindrique externe dans laquelle le second bloc est fixé par adhérisation, ce bloc étant fixé partiellement à la bague interne par adhérisation.

Avantageusement, la douille cylindrique comprend, à son extrémité libre opposée à la cage de logement du premier bloc en élastomère, au moins deux languettes radialement internes et diamétralement opposées de retenue du second bloc en élastomère dans la douille cylindrique.

De préférence, la douille cylindrique comprend quatre languettes radialement internes et deux à deux diamétralement opposées.

La bague cylindrique interne comprend, à son extrémité en regard de la cage de logement du premier bloc en élastomère, deux languettes radialement externes et diamétralement opposées et la bague cylindrique externe comprend également, à son extrémité en regard de la cage de logement du premier bloc en élastomère, deux languettes radialement internes et diamétralement opposées situées, avec les languettes radialement externes de la bague cylindrique interne, sensiblement dans un même plan transversal à la tige d'amortisseur, les languettes radialement internes et externes étant agencées pour coopérer de façon à empêcher une torsion du second bloc en élastomère autour de l'axe de la tige d'amortisseur relativement à la douille cylindrique.

Les languettes radialement externes de la bague cylindrique interne sont en forme de secteurs et les languettes radialement internes de la bague cylindrique externe sont en forme de segments de couronne s'étendant chacune entre les deux languettes radialement externes suivant un jeu réduit entre elles.

La bague cylindrique externe est immobilisée en rotation dans la douille cylindrique par une goupille logée dans deux perçages radiaux concentriques respectivement de la douille et de la bague externe.

Avantageusement, un tampon en élastomère est fixé à la cage de logement du premier bloc en élastomère dans la douille cylindrique et en regard de l'extrémité de la bague cylindrique interne.

Le second bloc en élastomère comprend deux évidements diamétralement opposés suivant une direction parallèle à l'axe rigide en s'étendant parallèlement à l'axe longitudinal du second bloc, ayant chacun en section transversale la forme d'une lumière arquée et définissant entre eux deux segments cylindriques diamétralement opposés fixés par adhérisation à la bague cylindrique interne.

Le premier bloc en élastomère a une raideur radiale élevée et comprend en outre deux évidements diamétralement opposés suivant une direction perpendiculaire à l'axe rigide et à la tige d'amortisseur et s'étendant parallèlement à l'axe rigide en ayant chacun en section transversale la forme d'une lumière arquée.

De préférence, l'axe rigide est en forme d'entretoise fixée par un boulon de fixation entre deux flasques fixes rigides parallèles solidaires de la caisse du véhicule.

Par ailleurs, des solutions ont déjà été proposées pour séparer les blocs de filtration de vibrations du ressort et de l'amortisseur de suspension. Dans ce cas, le bloc de filtration du ressort de suspension est soumis à un effort proportionnel à la position relative de la masse suspendue à la masse non suspendue et donc de sens constant, tandis que le bloc filtrant de l'amortisseur de suspension est soumis à un effort proportionnel à la vitesse de déplacement relatif entre la masse suspendue et la masse non suspendue et donc de sens alternatif. En outre, la valeur de l'amortissement étant proportionnelle au carré de la vitesse, le bloc filtrant de l'amortisseur de suspension a aussi pour fonction de ne pas empêcher tout mouvement de la suspension à haute fréquence.

La séparation des blocs de filtration du ressort de suspension de l'amortisseur de suspension comprend deux types d'architecture.

Selon la première architecture, le ressort de suspension n'est pas concentrique à l'amortisseur et ces deux organes de suspension ont des liaisons séparées avec la masse suspendue ou la masse non suspendue.

Selon la seconde architecture, le ressort de suspension est concentrique à l'amortisseur et leurs blocs de filtration sont également concentriques et fonctionnent en parallèle. Cependant, cette architecture ne peut fonctionner que pour des débattements angulaires très réduits, inférieurs à 5° d'angle, des blocs de filtration pour des raisons de risque de flambage du ressort de suspension.

La présente invention a pour but d'éliminer l'inconvénient ci-dessus lié à la seconde architecture de suspension.

A cet effet, l'invention propose également une suspension de véhicule automobile caractérisée en ce que le premier bloc en élastomère est logé dans une pièce de support solidaire de la coupelle supérieure et le second bloc en élastomère est logé dans la pièce de support au-dessus du premier bloc en élastomère perpendiculairement à ce dernier.

De préférence, le second bloc en élastomère a une grande raideur conique obtenue par un rapport élevé de la longueur du manchon du second bloc au diamètre de celui-ci.

La tige d'amortisseur est reliée au second bloc en élastomère par une fourchette solidaire de l'extrémité de la tige et un boulon de fixation du second bloc en élastomère entre les bras de la fourchette et traversant le second bloc coaxialement à celui-ci.

Le boulon de fixation solidarise le second bloc en élastomère aux bras de la fourchette par une entretoise disposée entre les deux bras perpendiculairement à ceux-ci et traversant le second bloc en élastomère fixé à l'entretoise par adhérisation.

Les deux bras de la fourchette traversent la coupelle supérieure d'appui du ressort perpendiculairement à celle-ci.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple, illustrant plusieurs modes de réalisation de l'invention, et dans lesquels :
- La figure 1 est une vue en coupe verticale d'une suspension de véhicule conforme à un premier mode de réalisation de l'invention et dont seule la partie supérieure de liaison à la caisse du véhicule est représentée ;
- La figure 2 est une vue en coupe suivant la ligne II-II de la figure 1 ;
- La figure 3 est une vue en perspective de la partie de suspension de la figure 1 ;
- La figure 4 est une vue en coupe verticale de la partie supérieure d'une suspension de véhicule conforme à un second mode de réalisation de l'invention ;
- La figure 5 est une vue en coupe suivant la ligne V-V de la figure 4 ;
- La figure 6 est une vue en coupe suivant la ligne VI-VI de la figure 4 ;
- La figure 7 est une vue en coupe suivant la ligne VII-VII de la figure 4 ;
- La figure 8 est une vue partielle en coupe verticale d'une suspension conforme à un troisième mode de réalisation de l'invention ; et
- La figure 9 est une vue partielle en coupe suivant la ligne IX-IX de la figure 8.

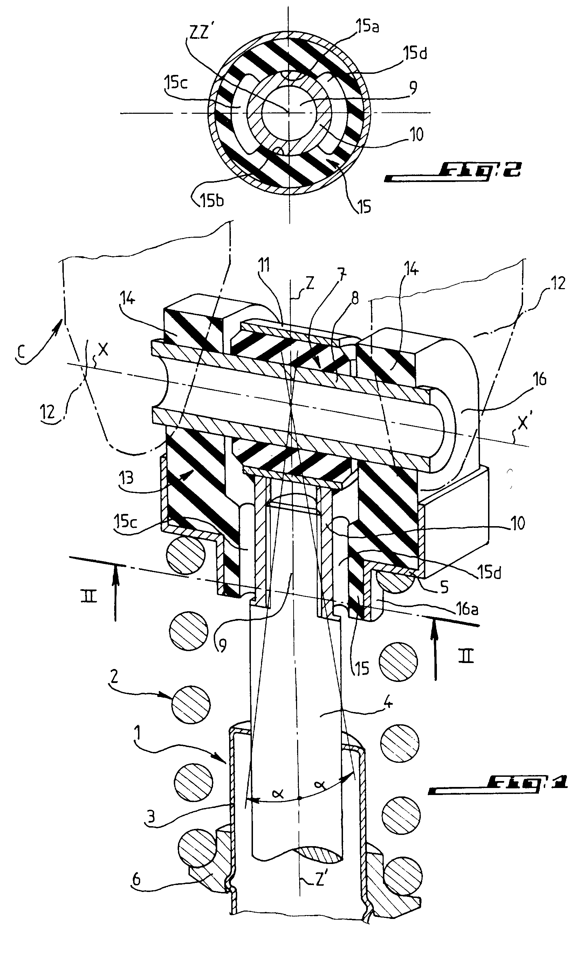

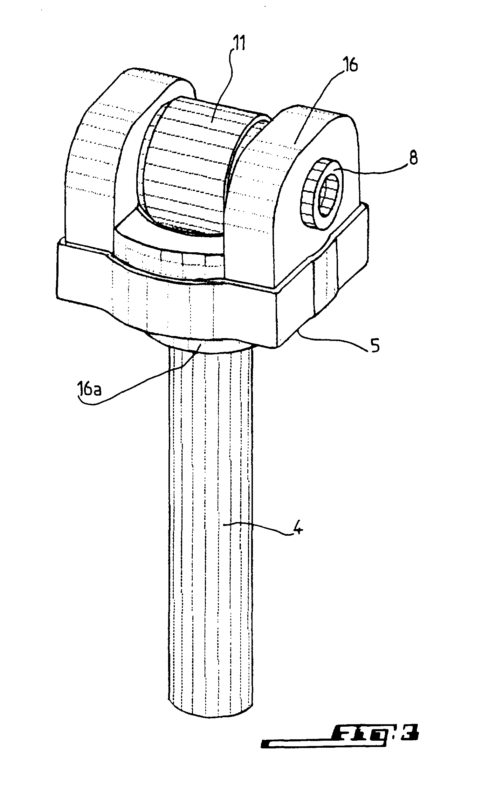

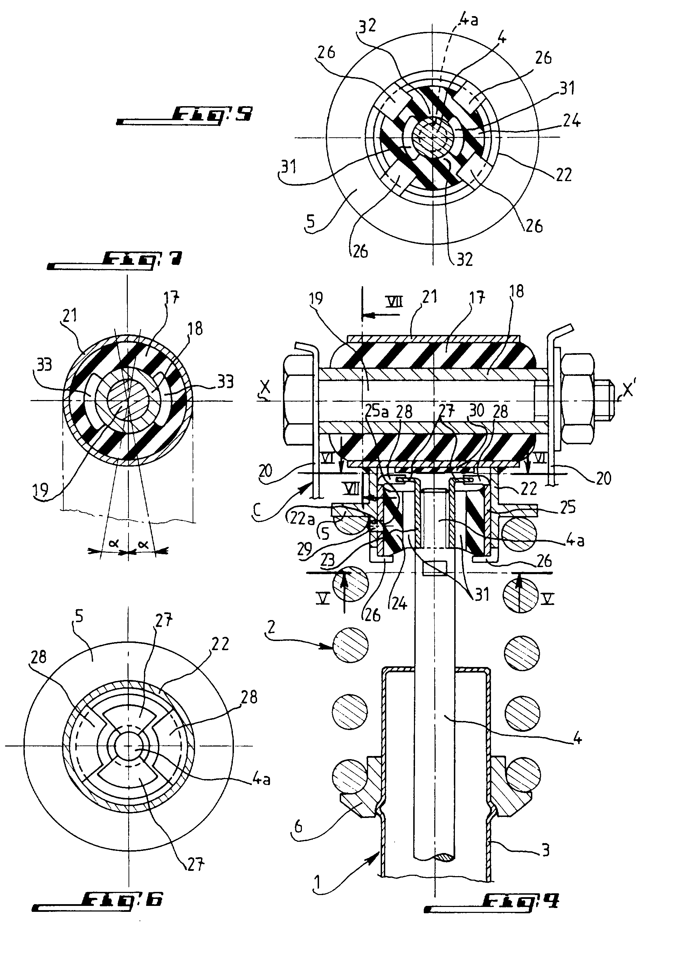

La suspension de véhicule automobile représentée aux figures 1 à 3 est du type comprenant un amortisseur 1 monté entre la caisse C du véhicule et un support de fusée de roue correspondante (non représenté), un ressort hélicoïdal 2 monté précontraint entre la caisse C et le cylindre 3 de l'amortisseur 1 concentriquement à la tige 4 de l'amortisseur par l'intermédiaire respectivement d'une coupelle supérieure 5 d'appui de la spire supérieure du ressort 2 et d'une coupelle inférieure 6 d'appui de la spire inférieure du ressort 2, la coupelle 6 étant solidaire du cylindre 3 extérieurement à celui-ci.

Selon l'invention, la tige 4 de l'amortisseur 1 est reliée à la caisse C du véhicule par l'intermédiaire d'un premier bloc en élastomère en forme de manchon 7 solidaire coaxialement d'un axe rigide 8 fixé à la caisse C. Plus précisément, l'extrémité de la tige d'amortisseur 4 comporte un embout cylindrique fileté extérieurement 9 sur lequel est bloqué coaxialement par vissage une douille métallique rigide 10 fixée radialement, par exemple par soudage, à une cage métallique rigide cylindrique 11 de logement du premier bloc en élastomère 7. Ce dernier est fixé par adhérisation à la fois dans la cage 11 et sur l'axe rigide 8 en forme d'entretoise traversée par un boulon (non représenté) de fixation de l'axe 8 entre deux flasques rigides parallèles 12 solidaires de la caisse C du véhicule. Ainsi, la tige d'amortisseur 4 s'étend perpendiculairement à l'axe rigide de liaison 8.

La coupelle supérieure 5 d'appui du ressort 2 est reliée à la caisse C du véhicule par l'intermédiaire d'un second bloc en élastomère 13 présentant la forme générale d'un étrier dont les deux branches 14 sont solidaires coaxialement de l'axe rigide 8, par exemple par adhérisation, de part et d'autre du premier bloc en élastomère 7. La partie de liaison des deux branches 14 du bloc en élastomère 13 et qui située en dessous de l'axe de liaison 8, comporte un manchon cylindrique en élastomère 15 d'axe perpendiculaire à l'axe 8 et fixé partiellement, par adhérisation, ou non fixé mais en appui sur la douille 10 de façon à permettre un glissement entre la douille 10 et le manchon en élastomère 15, suivant l'axe Z, Z', à la douille 10 coaxialement à celle-ci de façon à permettre au ressort de suspension 2 de suivre tout pivotement de la tige d'amortisseur autour de l'axe longitudinal X-X' de l'axe rigide 8 dans un plan perpendiculaire à cet axe. La figure 1 représente la valeur d'angle de pivotement ∝ que peut avoir l'amortisseur 1 autour de l'axe X-X' de part et d'autre d'une position verticale de la tige d'amortisseur 4, l'angle ∝ pouvant aller de 0 à un angle important.

Le bloc en élastomère 13 comprenant les branches 14 et le manchon 15 est monobloc.

La fixation du manchon en élastomère 15 du bloc 13 à la douille 10 s'effectue par deux secteurs cylindriques 15a, et 15b diamétralement opposés suivant une direction perpendiculaire à l'axe X-X' comme représenté en figure 2. Cette dernière montre que le manchon en élastomère 15 comprend en outre deux évidements 15c et 15d diamétralement opposés suivant l'axe X-X' et s'étendant à travers le manchon 15 axialement à celui-ci. Chaque évidement 15c, 15d présentent en section transversale la forme d'une lumière arquée. La liaison du manchon en élastomère 15 à la tige d'amortisseur 4 permet d'obliger la paroi 5 d'appui du ressort 2 à suivre le mouvement de rotation de l'amortisseur 1 autour de l'axe X-X' et donc d'assurer un bon guidage du ressort 2 par rapport à l'amortisseur 1. En outre, les deux évidements 15c, 15d permettent de réduire la raideur du manchon en élastomère 15 suivant l'axe Z-Z' perpendiculaire à l'axe X-X' de façon à éviter le couplage entre la douille rigide 10 et la cage 16 de logement du bloc en élastomère 14.

La cage 16 est réalisée en un corps métallique rigide embouti ou par tout autre moyen approprié, dont l'espace interne est de forme conjuguée au bloc en élastomère 14 et a sa paroi plane inférieure constituant la coupelle 5 d'appui du ressort 2. Bien entendu, la cage 16 comporte à sa partie inférieure une douille métallique centrale 16a raccordée à la paroi 5 et enfermant le manchon en élastomère 15. Le bloc en élastomère 13 est fixé par adhérisation ou par simple contact dans la cage 16.

Le bloc en élastomère 13 a une raideur radiale relativement élevée, tandis que le bloc en élastomère 7 a une raideur radiale relativement plus faible que l'autre bloc.

Lorsque la suspension est sollicitée verticalement suivant de faibles amplitudes de fréquence élevée, la construction conforme à l'invention permet, par un découplage de l'appui de l'amortisseur de celui du ressort offrant une raideur plus faible concernant le bloc de l'amortisseur, d'améliorer le confort du véhicule à la fois du point de vue acoustique et du point de vue vibratoire. La construction de l'invention assure toujours un guidage de l'appui du ressort par l'amortisseur lors des solicitations suivant l'axe X-X' (débattement vertical de l'élément de suspension). En outre, la construction de l'invention assure une sécurité de l'accrochage de la suspension puisqu'en cas de désolidarisation du manchon inférieur 15 de la douille 10 solidaire de l'extrémité de la tige d'amortisseur, désolidarisation pouvant être due au cisaillement et/ou à la fatigue en endurance de ce manchon, la tige d'amortisseur restera maintenue en position grâce à la solidarisation par soudage de la douille d'extrémité 10 de la tige à la cage 11 de logement du bloc en élastomère 7 de l'amortisseur. La sécurité de l'accrochage entre la douille d'extrémité 10 de la tige d'amortisseur 4 et la cage 16 de logement du bloc en élastomère 13 du ressort de suspension 2 au travers de ce bloc est également assurée par l'intermédiaire des pièces formées par l'axe rigide de liaison 8, le bloc en élastomère 7 de l'amortisseur 1 et la cage 11 de logement de ce bloc lors du montage / démontage de l'amortisseur 1 par vissage / dévissage de l'extrémité de la tige d'amortisseur 4 dans la douille correspondante 10. Enfin, l'adaptation des raideurs (valeurs et linéarité) suivant l'axe Z-Z' entre la cage 16 de logement du bloc en élastomère 13 du ressort de suspension 2 et l'axe rigide de liaison 8 à la caisse et entre la cage 11 de logement du bloc en élastomère 7 de l'amortisseur 1 et l'axe rigide de liaison 8 ainsi qu'entre la douille d'extrémité 10 de la tige d'amortisseur 1 et l'axe rigide de liaison 8 peut s'effectuer par le choix des modules utilisés pour les blocs isolants en élastomère du ressort de suspension et de l'amortisseur ou par une adaptation des formes de ces blocs.

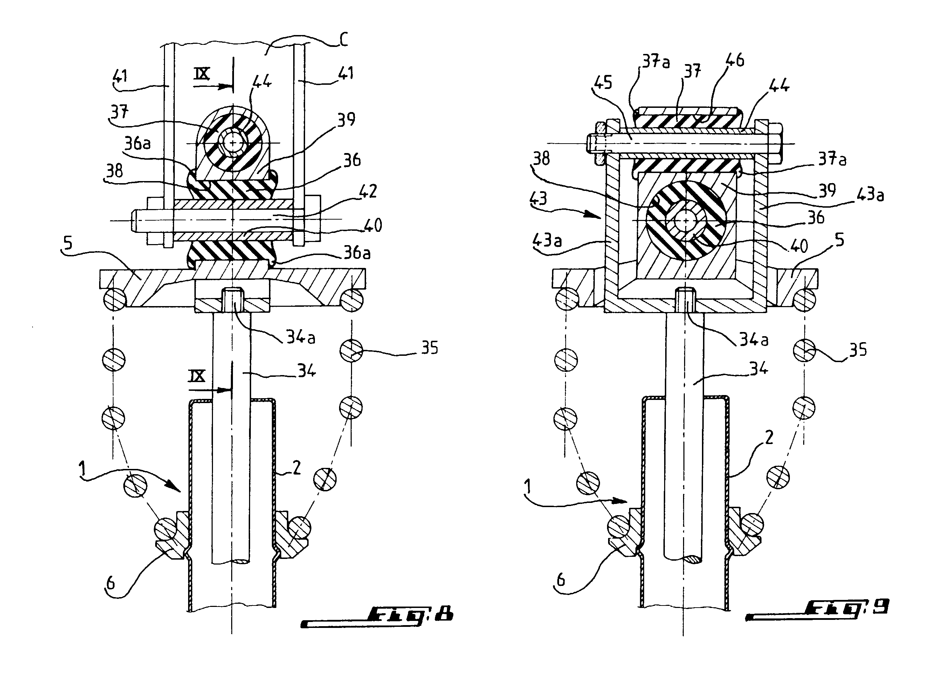

Le second mode de réalisation de la suspension de véhicule automobile telle que représentée aux figures 4 à 7, est du type comprenant un amortisseur 1 monté entre la caisse C du véhicule et un support de fusée de roue correspondante (non représenté), un ressort hélicoïdal 2 monté précontraint entre la caisse C et le cylindre 3 de l'amortisseur 1 concentriquement à la tige 4 de l'amortisseur par l'intermédiaire respectivement d'une collerette supérieure 5 d'appui de la spire supérieure du ressort 2 et d'une coupelle inférieure 6 d'appui de la spire inférieure de ce ressort, la coupelle 6 étant solidaire du cylindre 3 extérieurement à celui-ci.

Selon l'invention, la collerette 5 d'appui du ressort 2 est fixée à la caisse C par l'intermédiaire d'un premier bloc en élastomère en forme de manchon 17 solidaire coaxialement d'un axe métallique rigide 18 ayant la forme d'une entretoise fixée par un boulon de fixation 19 entre deux flasques rigides parallèles 20 solidaires de la caisse C. L'axe rigide 18 est disposé transversalement à la tige d'amortisseur 4 au-dessus du ressort de suspension 2 et le bloc en élastomère 17 est logé dans une cage cylindrique 21 coaxiale à l'axe 18 et dans laquelle est fixé de préférence par adhérisation le bloc 17.

Une douille cylindrique 22 est fixée radialement, par exemple par soudage, à la cage 21 extérieurement à celle-ci et comporte la collerette 5.

L'extrémité supérieure de la tige d'amortisseur 4 comporte un embout fileté 4a auquel est fixée par vissage une bague cylindrique interne 23 coaxialement à la tige 4 et à laquelle est fixé partiellement un second bloc en élastomère 24 en forme de manchon logé dans la douille 22. De la sorte, le second bloc en élastomère 24 s'étend perpendiculairement au premier bloc 17 en dessous de celui-ci.

Le bloc 24 a une raideur en direction perpendiculaire à l'axe 18 plus faible que celle du bloc 17 suivant cette même direction.

Le bloc en élastomère 24 est fixé par adhérisation dans une bague cylindrique externe 25 solidaire de la douille 22 qui comprend, à son extrémité libre opposée à la cage 21, au moins deux languettes radialement internes et diamétralement opposées 26 permettant de retenir ou d'emprisonner axialement le bloc en élastomère 24 dans la douille 22. De préférence, la douille 22 comprend quatre languettes radialement internes 26 qui sont deux à deux diamétralement opposées.

La bague interne 23 comprend, à son extrémité située en regard de la cage 21, deux languettes radialement externes et diamétralement opposées 27 en forme de secteur et la bague cylindrique externe 25 comprend également, à son extrémité en regard de la cage 21, deux languettes radialement internes et diamétralement opposées 28 en forme de segment de couronne. Les languettes 27 et 28 sont situées sensiblement dans un même plan transversal à la tige d'amortisseur 4 et les languettes 28 s'étendent chacune entre les deux languettes 27 suivant un faible jeu angulaire défini entre leurs bords adjacents respectifs de façon à empêcher une torsion du bloc en élastomère 24 autour de l'axe longitudinal de la tige d'amortisseur 4 relativement à la douille cylindrique 22 lors du serrage, par vissage, de la bague interne 23 sur l'embout fileté 4a de la tige d'amortisseur 4.

La bague externe 25 est immobilisée en rotation relativement à la douille 22 par une goupille 29 logée dans deux perçages radiaux concentriques 22a, 25a respectivement de la douille 22 et de la bague externe 25. Cette goupille empêche l'entraînement en rotation du bloc en élastomère 24 et de la douille 25 relativement à la douille 22 lors de la fixation de l'embout d'extrémité 4a de la tige d'amortisseur 4 dans la bague interne 23.

Un tampon en élastomère 30 est fixé par adhérisation à la cage 21 dans la douille 22 en face du bloc en élastomère 24 et de la bague interne 23 afin d'amortir les débattements axiaux de la tige d'amortisseur 4 et sert ainsi de limitation de course de la bague intérieure 23 partiellement solidaire du bloc 24. Ce dernier comprend deux évidements 31 diamétralement opposés suivant une direction parallèle à l'axe 18 en s'étendant au travers du bloc 24 parallèlement à l'axe longitudinal de celui-ci confondu à l'axe longitudinal de la tige d'amortisseur 4. Les deux évidements 31 présentent chacun en section transversalement la forme d'une lumière arquée et définissent entre eux deux segments cylindriques diamétralement opposés 32 du bloc 24 fixés par adhérisation ou autre moyen à la bague interne 23. Les deux évidements 31 permettent de réduire la raideur du bloc en élastomère 24 suivant la direction perpendiculaire à l'axe 18.

Le bloc en élastomère 17 comprend deux évidements 33 diamétralement opposés suivant une direction perpendiculaire à l'axe 18 et à la tige d'amortisseur 4 et s'étendant parallèlement à l'axe 18 en ayant chacun, en section transversale, la forme d'une lumière arquée. Ces évidements 33 favorisent un guidage de la collerette 5 d'appui du ressort 2 par l'amortisseur 1 lors des sollicitations de ce dernier autour de l'axe longitudinal X-X' de l'axe rigide 18, c'est-à-dire qu'ils permettent au ressort 2 de suivre tout pivotement de la tige d'amortisseur 4 autour de l'axe 18 dans un plan perpendiculaire à ce dernier.

Selon le troisième mode de réalisation la suspension de véhicule automobile telle que représentée aux figures 8 et 9, un amortisseur 1 est monté entre la caisse C du véhicule et un support de la fusée de roue correspondante (non représenté) et comportant un cylindre d'amortisseur 2 et une tige d'amortisseur 34 montée à coulissement dans le cylindre 2.

La suspension comprend en outre un ressort hélicoïdal de suspension 35 monté entre la caisse C et le cylindre 2 de l'amortisseur 1 concentriquement à la tige 34 de l'amortisseur 1.

Plus précisément, le ressort de suspension 35 est monté précontraint entre une coupelle supérieure 5 et une coupelle inférieure 6 solidaire du corps du cylindre d'amortisseur 2. Deux blocs en matériau élastomère 36, 37 sont prévus pour absorber les vibrations générées par l'amortisseur 1 et le ressort de suspension 35.

Selon l'invention, les deux blocs de filtration 36, 37 sont disposés en série et non pas en parallèle comme dans les dispositions antérieurement connues.

Ainsi, la coupelle supérieure 5 sous laquelle vient en appui la spire supérieure du ressort de suspension 35, est fixée à la caisse C par l'intermédiaire du premier bloc en élastomère 36 qui est en forme de manchon situé à l'extérieur du ressort 35 au-dessus de la coupelle 5. Le bloc en élastomère 36 est logé dans un trou circulaire traversant 38 d'une pièce de support 39 solidaire de la coupelle 5 en s'étendant perpendiculairement au-dessus de celle-ci. Le bloc en élastomère 36 comporte à ses deux flancs parallèles opposés deux collerettes 36a en appui respectivement sur deux parois latérales de la pièce de support 39 de façon à assurer le maintien axial du bloc 36 dans la pièce du support 39. En outre, le bloc en élastomère 36 est fixé, par adhérisation, sur une entretoise rigide 40 traversant coaxialement le bloc 36 et fixée entre deux parois verticales 41 perpendiculairement à celles-ci, les parois 41 étant solidaires de la caisse C du véhicule. L'entretoise 40 est fixée aux deux parois 41 par l'intermédiaire d'un boulon de fixation 43 la traversant coaxialement.

De préférence, le bloc en élastomère 36 a une raideur radiale élevée.

La tige d'amortisseur 34 comporte un embout supérieur fileté 34a auquel est fixée une partie 43 en forme de fourchette dont les deux bras 43a s'étendent vers le haut par rapport aux figures et traversent la coupelle supérieure 5. Une entretoise 44 est fixée entre les deux bras 43a en partie supérieure de ceux-ci par l'intermédiaire d'un boulon 45 traversant coaxialement celle-ci.

Le second bloc en élastomère 37 en forme de manchon est fixé par adhérisation sur l'entretoise 44 coaxialement à celle-ci. Le second bloc en élastomère 37 est logé dans la pièce de support 39 au-dessus du premier bloc en élastomère 36 et perpendiculairement à ce dernier. Le second bloc 37 comporte également à ses deux extrémités deux collerettes 37a en appui respectivement sur deux parois opposées de la pièce de support 39 de façon à maintenir axialement le bloc 37 dans le trou traversant correspondant 46 de la pièce 39.

Le second bloc en élastomère 37 a une faible raideur radiale et une grande raideur conique qui est obtenue par un rapport élevé entre la longueur du manchon cylindrique le constituant et son diamètre, supprimant ainsi tout risque de flambage du ressort de suspension 34. Le cas échéant, un évidement (non représenté) peut être réalisé au centre du second bloc de filtration 37 pour diminuer la raideur de celui-ci et participer à la suppression du flambage du ressort 34.

De la sorte, la raideur totale du bloc de filtration 37 entre l'amortisseur 1 et la caisse C du véhicule est substantiellement plus faible que celle du bloc filtrant 36 entre le ressort 4 et la caisse C.

La suspension ci-dessus décrite du troisième mode de réalisation de l'invention peut fonctionner pour des débattements angulaires relativement important des blocs de filtration sans risque de flambage du ressort de suspension.

## Revendications

1. Suspension de véhicule automobile comprenant un amortisseur monté entre la caisse du véhicule et un support de la fusée de roue, un ressort hélicoïdal monté précontraint entre la caisse et le cylindre de l'amortisseur concentriquement à la tige de celui-ci par l'intermédiaire respectivement d'une coupelle ou collerette d'appui supérieure et d'une coupelle d'appui inférieure, et deux blocs en élastomère permettant d'absorber les vibrations produites notamment par le ressort et l'amortisseur, **caractérisée en ce que** la coupelle ou collerette d'appui (5) du ressort (2, 35) est fixée à la caisse (C) par l'intermédiaire d'un premier bloc en élastomère (13 ; 17 ; 36) solidaire coaxialement d'un axe rigide (8 ; 18 ; 40) fixé à la caisse (C) transversalement à la tige (4 ; 34) d'amortisseur (1) au-dessus du ressort (2 ; 35) et **en ce que** l'extrémité de la tige d'amortisseur (4 ; 34) est reliée à la caisse (C) par l'intermédiaire d'un second bloc en élastomère en forme de manchon (7 ; 24 ; 37) d'une raideur en direction transversale à l'axe rigide (8 ; 18 ; 40) plus faible que celle du premier bloc en élastomère (13 ; 17 ; 36) suivant cette même direction.

2. Suspension selon la revendication 1, **caractérisée en ce que** le premier bloc en élastomère (13) est en forme d'étrier dont les deux branches (14) sont solidaires coaxialement de l'axe rigide (8) de part et d'autre du second bloc en élastomère (7) et dont la partie de liaison des deux branches (14) est traversée par l'extrémité de la tige d'amortisseur (4) et reliée à cette extrémité de façon à permettre au ressort (2) de suivre tout pivotement de la tige d'amortisseur (4) autour de l'axe rigide (8) dans un plan perpendiculaire à ce dernier.

3. Suspension selon la revendication 1 ou 2, **caractérisée en ce que** l'extrémité de la tige d'amortisseur (4) est solidaire d'une douille métallique rigide coaxiale (10) fixée radialement à une cage rigide cylindrique (11) de logement du second bloc en élastomère (7) fixé par adhérisation dans la cage cylindrique (11) et sur l'axe rigide (8).

4. Suspension selon la revendication 3, **caractérisée en ce que** la partie de liaison des deux branches (14) du premier bloc en élastomère (13) comporte un manchon (15) partiellement solidaire, par adhérisation, ou non fixé mais en appui sur la douille (10) de façon à permettre un glissement entre la douille (10) et le manchon en élastomère 15, suivant l'axe (Z, Z'), de la douille métallique rigide (10) en des emplacements diamétralement opposés suivant une direction perpendiculaire à l'axe rigide (8).

5. Suspension selon l'une des revendications précédentes, **caractérisée en ce que** le premier bloc en élastomère (13) est logé dans une cage métallique emboutie (16) de forme conjuguée au second bloc (13) et dont la paroi plane intérieure constitue la coupelle supérieure (5) d'appui du ressort (2).

6. Suspension selon la revendication 5, **caractérisée en ce que** le manchon (15) du premier bloc en élastomère (13) comprend deux évidements (15c, 15d) diamétralement opposés suivant une direction parallèle à l'axe rigide (8) et s'étendant parallèlement à l'axe du manchon (15), chaque évidement (15c, 15d) ayant en section transversale la forme d'une lumière arquée et permettant de réduire la raideur du manchon (15) en élastomère suivant la direction perpendiculaire à l'axe rigide (8).

7. Suspension selon l'une des revendication 3 à 6, **caractérisée en ce que** l'extrémité de la tige d'amortisseur (4) est fixée par vissage dans la douille métallique rigide (10).

8. Suspension selon l'une des revendications précédentes, **caractérisée en ce que** l'axe rigide (8) est en forme d'entretoise traversée par un boulon de fixation à la caisse (C) du véhicule.

9. Suspension selon l'une des revendications précédentes, **caractérisée en ce que** le premier bloc en élastomère (13) est monobloc.

10. Suspension selon la revendication 1, **caractérisée en ce que** le premier bloc en élastomère (17) est en forme de manchon logé dans une cage cylindrique (21) à laquelle est fixée radialement et extérieurement une douille cylindrique (22) comportant la collerette (5) et **en ce que** le second bloc en élastomère en forme de manchon (24) est logé dans la douille cylindrique (22) et fixé à l'extrémité (4a) de la tige d'amortisseur (4) par l'intermédiaire d'une bague cylindrique interne (23) solidaire coaxialement de cette extrémité.

11. Suspension selon la revendication 10, **caractérisée en ce que** le second bloc en élastomère (24) est logé dans la douille (22) par l'intermédiaire d'une bague cylindrique externe (25) dans laquelle le second bloc (24) est fixé par adhérisation, ou autre moyen, et est fixé partiellement à la bague interne (23) par adhérisation ou autre moyen.

12. Suspension selon la revendication 10 ou 11, **caractérisée en ce que** la douille cylindrique (22) comprend, à son extrémité libre opposée à la cage (21) de logement du premier bloc en élastomère (17), au moins deux languettes radialement internes et diamétralement opposées (26) de retenue du second bloc en élastomère (14) dans la douille cylindrique (22).

13. Suspension selon la revendication 12, **caractérisée en ce que** la douille cylindrique (22) comprend quatre languettes radialement internes et deux à deux diamétralement opposées (26).

14. Suspension selon l'une des revendications 11 à 13, **caractérisée en ce que** la bague cylindrique interne (23) comprend, à son extrémité en regard de la cage (21) de logement du premier bloc en élastomère (17), deux languettes radialement externes et diamétralement opposées (27) et la bague cylindrique externe (25) comprend également, à son extrémité en regard de la cage (21) de logement du premier bloc en élastomère (24), deux languettes radialement internes et diamétralement opposées (28) situées, avec les languettes radialement externes (27) de la bague cylindrique interne (23), sensiblement dans un même plan transversal à la tige d'amortisseur (4), les languettes radialement internes (27) et externes (28) étant agencées pour coopérer de façon à empêcher une torsion du second bloc en élastomère (24) autour de l'axe de la tige d'amortisseur (4) relativement à la douille cylindrique (22).

15. Suspension selon la revendication 14, **caractérisée en ce que** les languettes radialement externes (27) de la bague cylindrique interne (23) sont en forme de secteurs et les languettes radialement internes (28) de la bague cylindrique externe (23) sont en forme de segments de couronne s'étendant chacune entre les deux languettes radialement externes (27) suivant un jeu réduit entre elles.

16. Suspension selon l'une des revendications 11 à 15, **caractérisée en ce que** la bague cylindrique externe (25) est immobilisée en rotation dans la douille cylindrique (22) par une goupille (29) logée dans deux perçages radiaux concentriques (22a, 25a) respectivement de la douille (22) et de la bague externe (25).

17. Suspension selon l'une des revendications 10 à 16, **caractérisée en ce qu'**un tampon en élastomère (30) est fixé à la cage (21) de logement du premier bloc en élastomère (17) dans la douille cylindrique (22) et en regard de l'extrémité de la bague cylindrique interne (23).

18. Suspension selon l'une des revendications 11 à 17, **caractérisée en ce que** le second bloc en élastomère (24) comprend deux évidements (31) diamétralement opposés suivant une direction parallèle à l'axe rigide (18) en s'étendant parallèlement à l'axe longitudinal du second bloc (24), ayant chacun en section transversale la forme d'une lumière arquée et définissant entre eux deux segments cylindriques diamétralement opposés (32) fixés par adhérisation à la bague cylindrique interne (23).

19. Suspension selon l'une des revendications 10 à 18, **caractérisée en ce que** le premier bloc en élastomère (17) comprend deux évidements (33) diamétralement opposés suivant une direction perpendiculaire à l'axe rigide (18) et à la tige d'amortisseur (4) et s'étendant parallèlement à l'axe rigide (18) en ayant chacun en section transversale la forme d'une lumière arquée.

20. Suspension selon l'une des revendications 10 à 19, **caractérisée en ce que** l'axe rigide (18) est en forme d'entretoise fixée par un boulon (19) entre deux flasques fixes rigides parallèles (20) solidaires de la caisse (C) du véhicule.

21. Suspension selon la revendication 1, **caractérisée en ce que** le premier bloc en élastomère (36) en forme de manchon est logé dans une pièce de support (39) solidaire de la coupelle supérieure et le second bloc en élastomère (37) est logé dans la pièce de support (39) au-dessus du premier bloc en élastomère perpendiculaire à ce dernier.

22. Suspension selon la revendication 21, **caractérisée en ce que** le second bloc en élastomère (37) a une grande raideur conique obtenue par un rapport élevé de la longueur du manchon du second bloc (37) au diamètre de celui-ci.

23. Suspension selon la revendication 21 ou 22, **caractérisée en ce que** la tige d'amortisseur (34) est reliée au second bloc en élastomère (37) par une fourchette (43) solidaire de l'extrémité de la tige (34) et un boulon (45) de fixation du second bloc en élastomère (37) entre les bras (43a) et la fourchette (43) traversant le second bloc (8) coaxialement à celui-ci.

24. Suspension selon la revendication 23, **caractérisée en ce que** le boulon de fixation (46) solidarise le second bloc en élastomère (37) aux bras (43a) de la fourchette (43) par une entretoise (44) disposée entre les deux bras (43a) perpendiculairement à ceux-ci et traversant le second bloc en élastomère (37) fixé à l'entretoise (44) par adhérisation.

25. Suspension selon la revendication 23 ou 24, **caractérisée en ce que** les deux bras (43a) de la fourchette (43) traversent la coupelle supérieure d'appui (5) du ressort (35) perpendiculairement à celle-ci.

26. Suspension selon l'une des revendications 21 à 25, **caractérisée en ce que** le premier bloc en élastomère (36) est fixé à la caisse (C) du véhicule par un boulon (42) traversant l'axe rigide (40) creux formant entretoise fixé à la caisse (C) et sur lequel l'axe (40) est fixé par adhérisation le premier bloc en élastomère (36) coaxialement à celle-ci.
